# EUROPEAN PATENT SPECIFICATION

(11) **EP 4 286 590 B1**
(45) Date of publication and mention of the grant of the patent: **22.10.2025**
(21) Application number: 22790740.9
(22) Date of filing: 09.03.2022
(51) Int. Cl.: E01H 1/08

(54) **BLOWER**
GEBLÄSE
SOUFFLANTE

(30) Priority: 19.04.2021 CN 202110417507
(43) Date of publication of application: 06.12.2023
(73) Proprietor: Nanjing Chervon Industry Co., Ltd., Nanjing, Jiangsu 211106 (CN)
(72) Inventor: YAMAOKA, Toshinari, Nanjing, Jiangsu 211106 (CN); GUO, Jianpeng, Nanjing, Jiangsu 211106 (CN)
(74) Representative: Sun, Yiming
(86) International application number: PCT/CN2022/079932
(87) International publication number: WO 2022/222631

(56) References cited:
- CN-A- 1 939 673
- CN-A- 104 074 156
- CN-A- 111 893 933
- CN-U- 208 081 679
- US-A1- 2009 223 017
- US-A1- 2020 040 538
- US-A1- 2020 040 538
- US-A1- 2021 033 115

## Description

This application claims priority to Chinese Patent Application No. 202110417507.7 filed with the China National Intellectual Property Administration (CNIPA) on Apr. 19, 2021.

### TECHNICAL FIELD

The present application relates to a power tool and, in particular, to a blower.

### BACKGROUND

A blower is a commonly used garden tool, which can help a user clean fallen leaves in a garden with an airflow. When the blower ejects gas, the ejected object generates a recoil force in a reverse direction due to conservation of momentum. As a result, when holding the blower, the user needs to suppress the recoil force generated by the blower to prevent the blower from deflecting. Consequently, the fatigue of the user is increased, which is not conducive to performing an operation for a long time. In addition, in order that the performance of the blower is improved, the weight of a battery pack and the weight of the blower are both increased accordingly, which is not conducive to performing the operation for a long time by the user. As a result, the improvement of the performance of the blower is further limited.

### SUMMARY

In order that the deficiencies of the related art are solved, an object of the present application is to provide a blower, where the performance of the blower is improved and the load on a user during the hold of the blower for use is reduced.

To achieve the preceding main object, the present application provides a blower. The blower includes: a motor; a fan driven by the motor to rotate about a central axis; a battery pack for supplying power to the motor; and a blower tube assembly forming an air inlet for the entry of air and an air outlet for the exit of the air. The blower further includes a first handle forming a first grip for a hold and a second handle forming a second grip for a hold, where a first plane passing through the central axis exists, where at least part of the blower tube assembly is distributed symmetrically with respect to the first plane, and a projection of the battery pack on the first plane is at least partially located between a projection of the first handle on the first plane and a projection of the second handle on the first plane.

In some examples, the first handle and the second handle are each located on a side of the blower tube assembly and relatively independent of each other.

In some examples, the battery pack, the first handle, and the second handle are located on the same side of the blower tube assembly, and the battery pack is located between the first handle and the second handle.

In some examples, the battery pack, the first handle, and the second handle are located on the blower tube assembly.

In some examples, the first handle and the second handle are located on the blower tube assembly, and the battery pack is located under the blower tube assembly.

In some examples, the first handle is located behind the blower tube assembly, one of the second handle and the battery pack is located on the blower tube assembly, and the other one of the second handle and the battery pack is located under the blower tube assembly.

In some examples, the central axis passes through at least part of the first grip.

In some examples, the first handle or the second handle is disposed around the blower tube assembly.

According to the invention, the battery pack is at least partially located behind the air inlet.

In some examples, when an airflow flows into the blower tube assembly through the air inlet, the battery pack is at least partially located on an extension line of an air path of the inflow airflow.

In some examples, the weight of the battery pack is greater than or equal to 3 kg and less than or equal to 6 kg.

In some examples, the rated power of the motor is greater than or equal to 1200 W and less than or equal to 4000 W, and the air volume of the air outlet of the blower is greater than or equal to 700 cubic feet per minute.

In some examples, the present application provides a blower. The blower includes: a motor; a fan driven by the motor to rotate about a central axis; a battery pack for supplying power to the motor; and a blower tube assembly forming an air inlet for the entry of air and an air outlet for the exit of the air. The blower further includes a first handle forming a first grip for a hold and a second handle forming a second grip for a hold. The rated power of the motor is greater than or equal to 1200 W and less than or equal to 4000 W, and the air volume of the air outlet of the blower is greater than or equal to 700 cubic feet per minute.

In some examples, the battery pack is detachably connected to the blower, and the overall weight of the blower with no battery pack mounted is greater than or equal to 1.8 kg and less than or equal to 3 kg.

In some examples, the diameter of the fan is larger than or equal to 85 mm and smaller than or equal to 100 mm.

In some examples, the present application provides a blower. The blower includes: a motor; a fan driven by the motor to rotate about a central axis; a battery pack coupling portion for connecting a battery pack for supplying power to the motor; and a blower tube assembly forming an air inlet for the entry of air and an air outlet for the exit of the air. The blower further includes a first handle forming a first grip for a hold and a second handle forming a second grip for a hold, where a first plane passing through the central axis is defined, where at least part of the blower tube assembly is distributed symmetrically with respect to the first plane, at least part of an orthographic projection of the battery pack coupling portion on the first plane is located between a projection of the first handle on the first plane and a projection of the second handle on the first plane.

Benefits are described below. In the present application, a double-handle structure is provided and the position of the battery pack is configured so that the distance between the position where the blower is held by a user and a recoil force generated when the blower runs is reduced. In addition, it is convenient for the user to operate the blower with the double-handle structure so that the weight and capacity of the battery pack can be increased accordingly, thereby increasing the volume of air exiting from the blower and reducing the burden on the user. Specifically, the moment of force generated at the hold position by the recoil force generated when the blower runs is reduced so that the burden on the user during the use of the blower is reduced.

### BRIEF DESCRIPTION OF DRAWINGS

FIG. 1 is a perspective view of a blower according to a first example not falling under the scope of the present invention;
FIG. 2 is a plan view of the blower in FIG. 1;
FIG. 3 is a sectional view of the blower in FIG. 1;
FIG. 4 is a perspective view of a blower according to a second example not falling under the scope of the present invention;
FIG. 5 is a plan view of the blower in FIG. 4;
FIG. 6 is a plan view of a blower according to a third example not falling under the scope of the present invention;
FIG. 7 is a plan view of a blower according to a fourth example not falling under the scope of the present invention;
FIG. 8 is a plan view of a blower according to a fifth example not falling under the scope of the present invention;
FIG. 9 is a perspective view of a blower according to the present invention;
FIG. 10 is a schematic view of the blower in FIG. 9 from another angle;
FIG. 11 is a side view of the blower in FIG. 9; and
FIG. 12 is a top view of the blower in FIG. 9.

### DETAILED DESCRIPTION

Examples of the present application are described below in detail with reference to the drawings. The same or similar reference numerals indicate the same or similar elements or elements having the same or similar functions. The examples described below with reference to the drawings are only intended to explain the present application and are not to be construed as limiting the present application.

In the description of the present application, the terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or "interaction relations between two elements". For those of ordinary skill in the art, specific meanings of the preceding terms in the present application may be understood based on specific situations.

The present application is described below in detail in conjunction with the drawings and the examples.

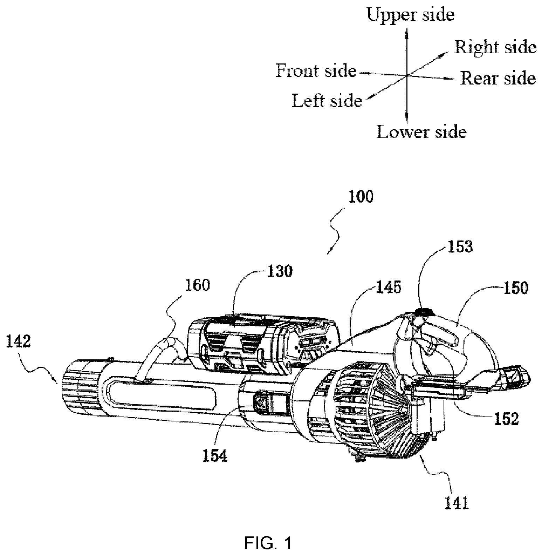

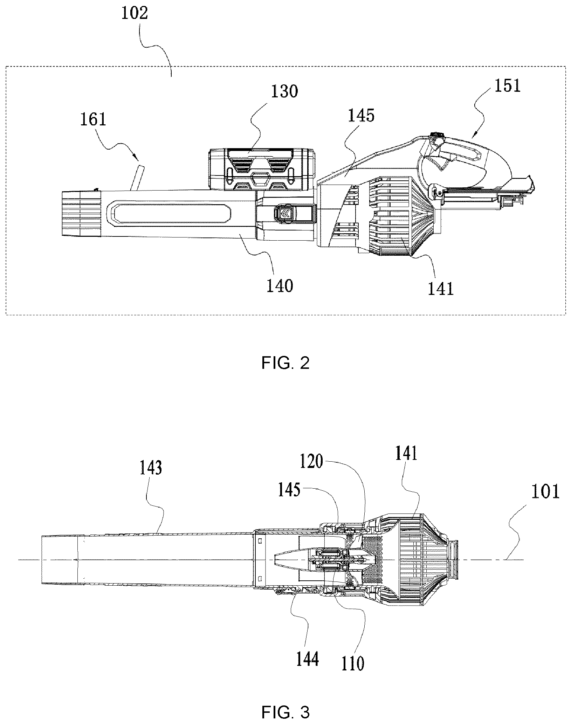

Referring to FIGS. 1 to 3, in an example of the present application, a blower 100 includes a motor 110, a fan 120, a battery pack 130, a blower tube assembly 140, and a first handle 150. The blower tube assembly 140 forms an air inlet 141 for the entry of air and an air outlet 142 for the exit of the air. The fan 120 is driven by the motor 110 to rotate about a central axis 101, and the battery pack 130 is used for supplying power to the motor 110. The fan 120 rotates to guide an airflow to enter the inside of the blower tube assembly 140 from the air inlet 141 and exit from the air outlet 142. The airflow is used for assisting in cleaning fallen leaves or other debris. The blower 100 further includes a switch 152 for controlling the start and stop of the machine, an air speed adjustment button 153 for adjusting the speed at which the air exits, and a maximum air speed key 154 for maintaining the blower 100 at the maximum air speed. In a first example, the switch 152 is disposed at the first handle 150. When the switch 152 is pulled, the blower 100 starts working. When the switch 152 is released, the blower 100 stops working. Specifically, the switch 152 is a trigger. Before the switch 152 is turned on, the air speed adjustment button 153 needs to be adjusted to a required speed at which the air exits, and then the switch 152 is turned on for performing a blowing operation. When a local area with a relatively enormous operation difficulty is encountered during the blowing operation, the speed at which the air exits may be temporarily adjusted to the maximum air speed through the maximum air speed key 154. When the maximum air speed does not need to be used, the state of the maximum air speed key 154 is changed so that a current air speed of the blower 100 returns to a speed specified by the air speed adjustment button 153. In some examples, the switch 152 is disposed at another position of the blower 100 instead of the handle.

The blower 100 further includes the first handle 150 forming a first grip 151 for a hold and a second handle 160 forming a second grip 161 for a hold. The first handle 150 is disposed behind the second handle 160, and the first handle 150 and the second handle 160 are configured to be relatively independent of each other. When operating the blower 100, the user may hold the first grip 151 of the first handle 150 and the second grip 161 of the second handle 160 with two hands separately so that the blower 100 can be operated more stably. Specifically, the first handle 150 is located substantially on the air inlet 141 and behind the air inlet 141, and the second handle 160 is located at a position which is on the blower tube assembly 140 and near the air outlet.

When the user holds the first handle 150 and the second handle 160 and uses the blower for performing a blow, the airflow is ejected outward through the air outlet 142 substantially along a first direction parallel to the central axis 101. In this case, the user is subjected to a recoil force generated by the ejection of the airflow, where the recoil force is substantially in a second direction opposite to the first direction. The recoil force generates the moment of force on the grip. To prevent the moment of force from driving the position of the whole blower 100 to be deflected, the user needs to give a force to overcome the moment of force in addition to bearing the gravity of the blower 100. There is a certain distance between the first handle 150 and the second handle 160, and the second handle 160 is provided so that the user can more easily overcome the moment of force generated by the recoil force, thereby making better use of the blower 100.

The switch 152 for controlling the motor 110 is disposed on the first handle 150. The user holds the first handle 150 and can press the switch 152 to control the running of the motor 110 when holding the first handle 150. The blower tube assembly 140 includes a first blower tube 143 and a second blower tube 144. The first blower tube 143 and the second blower tube 144 partially overlap each other. Specifically, part of the second blower tube 144 is disposed in the first blower tube 143, and the air outlet 142 is disposed at an end of the first blower tube 143. The blower 100 further includes a connection portion 145 and a hood, where the connection portion 145 connects the second blower tube 144 to the first handle 150, the connection portion 145 is configured to be open so that the air inlet 141 is formed, and the hood covers the outside of the air inlet 141. A flow guide cone for fixing the motor 110 is formed in the second blower tube 144, where the motor 110 is disposed in the flow guide cone, and the fan 120 is disposed behind the flow guide cone. The motor 110 includes a rotatable shaft of the motor 110, where the shaft of the motor 110 extends out from the inside of the flow guide cone and is connected to the fan 120, and the fan 120 can be driven by the shaft of the motor 110 to rotate about the central axis 101.

In some examples, the switch 152 is disposed on the second handle 160 and the user can control the switch 152 to be turned on or off when holding the second handle 160.

In the first example of the present application, the first handle 150 and the second handle 160 are each located on a side of the blower tube assembly 140 and relatively independent of each other. The first handle 150 and the second handle 160 may be disposed on the blower tube assembly 140. The blower 100 is further provided with a base disposed under the blower 100. Specifically, the base is located under the blower tube assembly 140. The base is disposed opposite to the first handle 150 and the second handle 160 and used for supporting the blower 100 on a plane. When the blower 100 is not required to be used, the blower 100 may be placed on the base so that the blower 100 does not easily tumble, which facilitates safe storage.

The battery pack 130, the first handle 150, and the second handle 160 are located on the same side of the blower tube assembly 140, and the battery pack 130 is located between the first handle 150 and the second handle 160. The battery pack 130 is connected to a battery pack coupling portion of the blower 100.

A first plane 102 passing through the central axis 101 exists, where at least part of the blower tube assembly 140 is distributed symmetrically with respect to the first plane 102, and a projection of the battery pack 130 on the first plane 102 is at least partially located between a projection of the first handle 150 on the first plane and a projection of the second handle 160 on the first plane.

In some examples, the battery pack 130, the first handle 150, and the second handle 160 are located on the blower tube assembly 140. A gap is disposed between the first handle 150 and the second handle 160, and the battery pack 130 is placed into the gap so that at least part of a projection of the battery pack 130 along a radial direction of the central axis 101 is located between the first handle 150 and the second handle 160, thereby making the balance of the blower 100 better. The overall center of gravity of the blower 100 to which the battery pack 130 is mounted is located between the first handle 150 and the second handle 160 or located in a projection of the first handle 150 or a projection of the second handle 160 in the radial direction of the central axis 101, thereby facilitating the hold of the user and improving the user's comfort in using the blower 100. In some examples, the projection of the battery pack 130 along the radial direction of the central axis 101 is located between the first handle 150 and the second handle 160, and the projection of the battery pack 130 in this direction does not overlap the projection of the first handle 150 or the projection of the second handle 160 in this direction.

Double handles are disposed so that the burden on the user during the use of the blower 100 can be reduced. The weight of the battery pack 130 which can be mounted to the blower 100 is increased so that the performance of the battery pack 130 can be improved. In some examples, the weight of the battery pack 130 is set to be greater than or equal to 3 kg and less than or equal to 6 kg. In some examples, the weight of the battery pack 130 is set to be greater than or equal to 3.5 kg and less than or equal to 6 kg. In some examples, the weight of the battery pack 130 is set to be greater than or equal to 4 kg and less than or equal to 6 kg.

Accordingly, the rated power of the motor 110 can be set to be greater than or equal to 1500 W and less than or equal to 4000 W, and the diameter of the fan 120 is larger than or equal to 85 mm and smaller than or equal to 100 mm so that the air volume of the blower 100 at the air outlet 142 can be greater than or equal to 700 cubic feet per minute. Thus, the air volume of the blower 100 is increased and the battery life of the blower 100 can be prolonged. The battery pack 130 is detachably connected to the blower 100, and the overall weight of the blower 100 with no battery pack 130 mounted is greater than or equal to 1.8 kg and less than or equal to 3 kg. In some examples, the blower 100 is provided with no base.

In some examples, the rated power of the motor 110 can be set to be greater than or equal to 1500 W and less than or equal to 4000 W, and the diameter of the fan 120 is larger than or equal to 80 mm and smaller than or equal to 110 mm so that the air volume of the blower 100 at the air outlet 142 can be greater than or equal to 600 cubic feet per minute and less than or equal to 1000 cubic feet per minute. Thus, the air volume of the blower 100 is increased and the battery life of the blower 100 can be prolonged. The battery pack 130 is detachably connected to the blower 100, and the overall weight of the blower 100 with no battery pack 130 mounted is greater than or equal to 1.5 kg and less than or equal to 4 kg.

In some examples, the rated power of the motor 110 can be set to be greater than or equal to 1200 W and less than or equal to 4000 W. In some examples, the rated power of the motor 110 can be set to be greater than or equal to 1300 W and less than or equal to 4000 W. In some examples, the rated power of the motor 110 can be set to be greater than or equal to 1400 W and less than or equal to 4000 W. In some examples, the rated power of the motor 110 can be set to be greater than or equal to 1500 W and less than or equal to 4000 W. In some examples, the rated power of the motor 110 can be set to be greater than or equal to 1600 W and less than or equal to 4000 W.

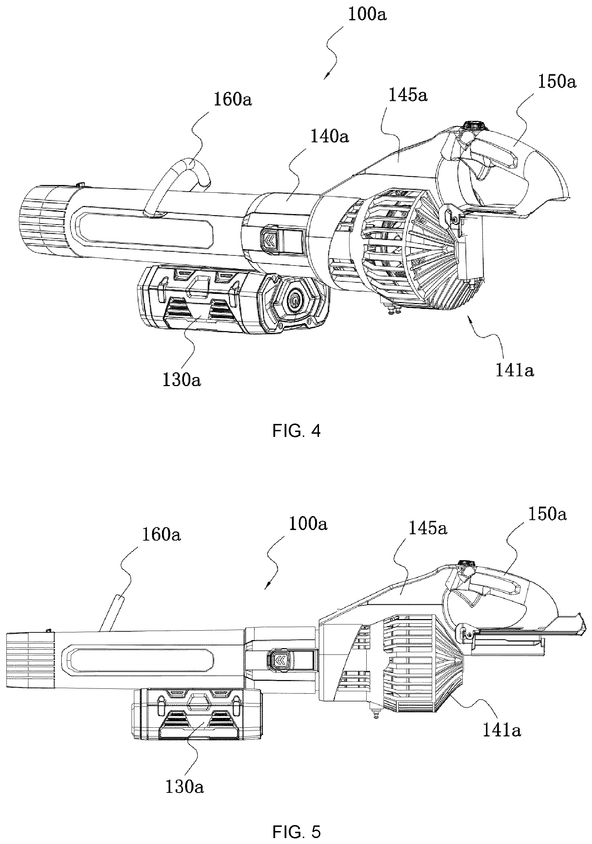

Referring to FIGS. 4 and 5, in a second example of the present application, a first handle 150a and a second handle 160a are located on a blower tube assembly 140a, and a battery pack 130a is located under the blower tube assembly 140a. At least part of a projection of the battery pack 130a along a radial direction of a central axis is located between the first handle 150a and the second handle 160a, thereby making the balance of a blower 100a better. The overall center of gravity of the blower 100a to which the battery pack 130a is mounted is located between the first handle 150a and the second handle 160a or located in a projection of the first handle 150a or a projection of the second handle 160a in the radial direction of the central axis, thereby facilitating the hold of the user and reducing the user's fatigue during the use of the blower 100a. A connection portion 145a connects the blower tube assembly 140a to the first handle 150a, and the lower end of the connection portion 145a is connected to a hood enclosing an air inlet 141a. In some examples, the projection of the battery pack 130a along the radial direction of the central axis is located between the first handle 150a and the second handle 160a, and the projection of the battery pack 130a in this direction does not overlap the projection of the first handle 150a or the projection of the second handle 160a in this direction. The blower further includes a base for supporting the blower so that the blower can stand on a plane. In some examples, the battery pack is connected to the base. In some examples, the blower is provided with no base.

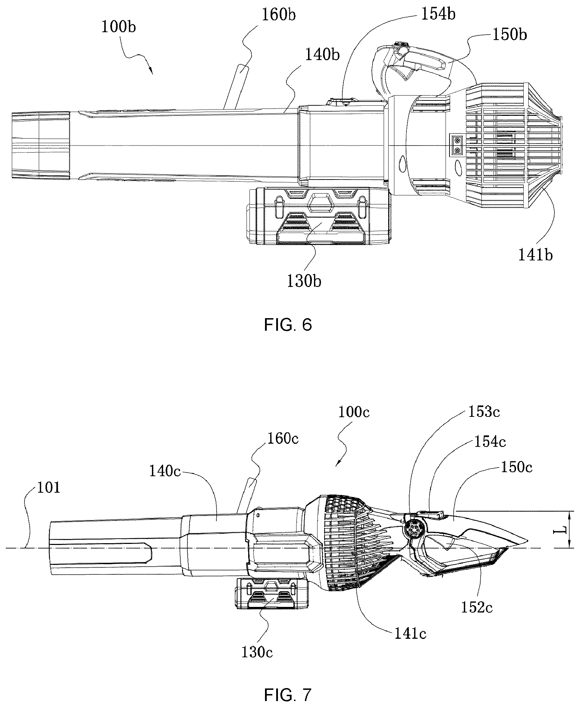

Referring to FIG. 6, in a third example of the present application, a first handle 150b, a second handle 160b, and a battery pack 130b of a blower 100b are each in front of an air inlet 141b, and the first handle 150c, the second handle 160b, and the battery pack 130b are each connected to a blower tube assembly 140b. In this example, the first handle 150b is directly connected to the blower tube assembly 140b, and a maximum air speed key is located on the blower tube assembly 140b. Specifically, a maximum air speed key 154b is located above the battery pack 130b to facilitate the operation of an operator.

Referring to FIG. 7, in a fourth example of the present application, a first handle 150c of a blower 100c is located behind a blower tube assembly 140c, and a second handle 160c of the blower 100c is located on the blower tube assembly 140c. In some examples, a battery pack 130c is located between the first handle and the second handle and located on the blower tube assembly 140c. At least part of a projection of the battery pack 130c along a radial direction of a central axis is located between the first handle 150c and the second handle 160c, thereby making the balance of the blower 100c better. In some examples, the battery pack 130c is located between the first handle and the second handle, in front of an air inlet 141c, and under the blower tube assembly 140c. A maximum air speed key 152c is adjusted to the top of the first handle 150c in the form of a button, and an air speed adjustment button 153c is adjusted to a side surface of the first handle 150c. Thus, it is convenient for an operator to press the maximum air speed key 152c with a thumb while pressing a switch 152c. This operation is easy and convenient. The maximum air speed key 154c is adjusted to a position above the switch 152c, and similarly, this position may be conveniently touched by a finger of a hand for a hold when the blower 100c is held.

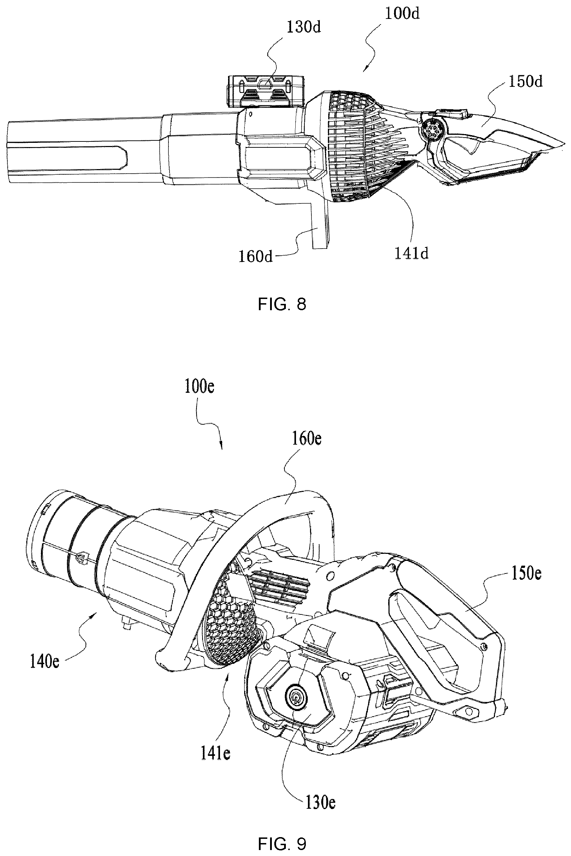

Referring to FIG. 8, in a fifth example of the present application, a first handle 150d of a blower 100d is located behind a blower tube assembly, and a second handle 160d of the blower 100d is located under the blower tube assembly. Specifically, the second handle 160d is located at a position under the blower tube assembly and near a hood of an air inlet 141d.

The first handle 150c in FIG. 7 and the first handle 150d in FIG. 8 are based on the same design concept. As shown in FIG. 7, the vertical distance between the highest point of the first grip 151 and the central axis 101 is a first distance L. In the fourth and fifth examples, the first distance L is less than or equal to 140 mm.

In the related art, the first handle 150 of the blower 100 is mostly similar to the first handles in FIGS. 1, 4, and 6, that is, the highest point of the first handle 150 is significantly higher than the highest point of the blower tube assembly 140. However, for a blower 100 with power of greater than 1200 W, a blower 100 with power of greater than 1600 W, or a blower 100 with power of greater than 2000 W in some examples, if the position of the first handle 150 is lowered so that the first grip 151 is as near to the central axis 101 as possible, the counteraction of huge torsion generated when the blower 100 with relatively high power works is facilitated and the user experience of the operator is optimized. Thus, the central axis 101 passes through at least part of the first grip.

In some examples, the first handle or the second handle is disposed around the blower tube assembly.

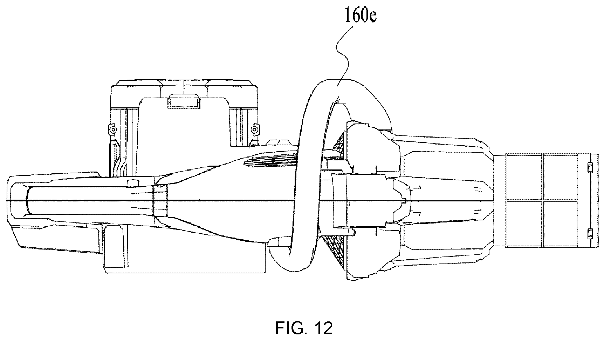

Referring to FIGS. 9 to 12, in a sixth example representing the present invention, a second handle 160e of a blower 100e is disposed around a blower tube assembly 140e. Specifically, the second handle 160e has a spiral shape and is disposed around the blower tube assembly 140e. Further, according to directional legends in FIG. 1, the operator may hold the second handle 160e from the upper side, the left side, the right side, and the like of the second handle 160e. This example provides various hold angles so that the operation is more flexible and convenient.

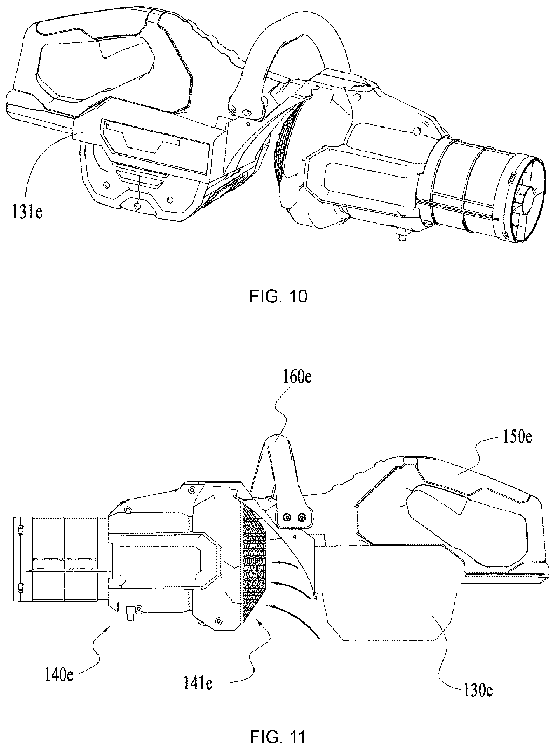

The first handle 150e is located behind the second handle 160e and the blower tube assembly 140e. The first handle 150e in this example is nearer to the central axis 101 than the first handles in the first, second and third examples. An air inlet 141e is located substantially below the second handle 160e, and a battery pack 130e is located substantially under the first handle 150e and at least partially located behind the air inlet 141e. The battery pack 130e and the first handle 150e are configured in this manner so that the center of gravity of the blower 100e is near the central axis 101, thereby improving the comfort of the hold. As shown in FIG. 11, an approximate track of an air duct through which the airflow flows is shown behind the air inlet 141e, and when the airflow flows into the blower tube assembly 140e through the air inlet 141e, the battery pack 130e is at least partially located on an extension line of an air path of the inflow airflow.

The blower 100e includes a battery pack coupling portion 131e for connecting the battery pack 130e for supplying power to the motor 110. During an actual design, the battery pack 130e may be designed to be inserted from a side of the first handle 150e. For example, the battery pack 130e may be inserted from left to right into the battery pack coupling portion 131e accommodating the battery pack 130e, inserted from right to left into the battery pack coupling portion 131e accommodating the battery pack 130e, or inserted from a lower side to an upper side into the battery pack coupling portion 131e accommodating the battery pack 130e. It is to be understood that for each of the preceding examples, the battery pack coupling portion may be disposed in an open environment, a semi-open environment, or a completely closed environment, which does not affect the technical effect of the present application and falls within the scope of the present application.

To sum up, in the first to sixth examples disclosed in FIGS. 1 to 12, the at least part of the projection of the battery pack along the radial direction of the central axis 101 on the plane passing through the central axis 101 is located between the first handle 150 and the second handle 160. This plane passing through the central axis 101 may be a plane which is along an up and down direction and passes through the central axis 101. In this case, the at least part of the projection of the battery pack along the radial direction of the central axis 101 on this plane is located between the first handle 150 and the second handle 160.

In the present application, unless otherwise expressly specified and limited, when a first feature is described as "on" or "under" a second feature, the first feature and the second feature may be in direct contact or be in contact via another feature between the two features instead of being in direct contact. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

## Claims

1. A blower (100, 100a, 100b, 100c, 100d, 100e), comprising:
a motor (110);
a fan (120) driven by the motor to rotate about a central axis (101);
a battery pack (130, 130a, 130b, 130c, 130d, 130e) for supplying power to the motor; and
a blower tube assembly (140) forming an air inlet (141) for an entry of air and an air outlet (142) for an exit of the air;
wherein the blower further comprises:
a first handle (150, 150a, 150b, 150c, 150d, 150e) forming a first grip (151) for a hold; and
a second handle (160, 160a, 160b, 160c, 160d, 160e) forming a second grip (161) for a hold;
wherein at least part of a projection of the battery pack along a radial direction of the central axis on a plane passing through the central axis is located between the first handle and the second handle; **characterized in that**
the battery pack is at least partially located behind the air inlet, that is in an inflow direction in a position before the air enters the air inlet.

2. The blower according to claim 1, wherein the first handle and the second handle are each located on a side of the blower tube assembly and relatively independent of each other.

3. The blower according to claim 2, wherein the battery pack, the first handle, and the second handle are located on a same side of the blower tube assembly, and the battery pack is located between the first handle and the second handle.

4. The blower according to claim 3, wherein the battery pack, the first handle, and the second handle are located on the blower tube assembly.

5. The blower according to claim 2, wherein the first handle and the second handle are located on the blower tube assembly, and the battery pack is located under the blower tube assembly.

6. The blower according to claim 1, wherein the first handle is located behind the blower tube assembly, one of the second handle and the battery pack is located on the blower tube assembly, and another one of the second handle and the battery pack is located under the blower tube assembly.

7. The blower according to claim 1, wherein the central axis passes through at least part of the first grip.

8. The blower according to claim 1, wherein the first handle or the second handle is disposed around the blower tube assembly.

9. The blower according to claim 1, wherein when an airflow flows into the blower tube assembly through the air inlet, the battery pack is at least partially located on an extension line of an air path of the inflow airflow.

10. The blower according to claim 1, wherein a weight of the battery pack is greater than or equal to 3 kg and less than or equal to 6 kg.

11. The blower according to claim 10, wherein rated power of the motor is greater than or equal to 1200 W and less than or equal to 4000 W, and an air volume of the air outlet of the blower is greater than or equal to 700 cubic feet per minute (19.8218 cubic meters).

12. The blower according to claim 11, wherein the battery pack is detachably connected to the blower, and an overall weight of the blower with no battery pack mounted is greater than or equal to 1.8 kg and less than or equal to 3 kg.

13. The blower according to claim 12, wherein a diameter of the fan is larger than or equal to 85 mm and smaller than or equal to 100 mm.

## Patentansprüche

1. Ein Gebläse (100, 100a, 100b, 100c, 100d, 100e), umfassend:
einen Motor (110);
einen Lüfter (120), der durch den Motor angetrieben wird, um sich um eine Mittelachse (101) zu drehen;
einen Batteriepakt (130, 130a, 130b, 130c, 130d, 130e) zur Stromversorgung des Motors; und
eine Gebläserohranordnung (140), die einen Lufteinlass (141) zum Eintritt von Luft und einen Luftauslass (142) zum Austritt der Luft bildet;
wobei das Gebläse ferner umfasst:
einen ersten Griff (150, 150a, 150b, 150c, 150d, 150e), der einen ersten Haltebereich (151) zum Festhalten bildet; und
einen zweiten Griff (160, 160a, 160b, 160c, 160d, 160e), der einen zweiten Haltebereich (161) zum Festhalten bildet;
wobei mindestens ein Teil einer Projektion des Batteriepakts entlang einer radialen Richtung der Mittelachse auf einer Ebene, die durch die Mittelachse verläuft, zwischen dem ersten Griff und dem zweiten Griff angeordnet ist;
**dadurch gekennzeichnet, dass**
der Batteriepakt zumindest teilweise hinter dem Lufteinlass angeordnet ist, das heißt in einer Zuflussrichtung an einer Position, bevor die Luft in den Lufteinlass eintritt.

2. Gebläse nach Anspruch 1, wobei der erste Griff und der zweite Griff jeweils an einer Seite der Gebläserohranordnung angeordnet und relativ unabhängig voneinander sind.

3. Gebläse nach Anspruch 2, wobei der Batteriepakt, der erste Griff und der zweite Griff auf derselben Seite der Gebläserohranordnung angeordnet sind und der Batteriepakt zwischen dem ersten Griff und dem zweiten Griff angeordnet ist.

4. Gebläse nach Anspruch 3, wobei der Batteriepakt, der erste Griff und der zweite Griff auf der Gebläserohranordnung angeordnet sind.

5. Gebläse nach Anspruch 2, wobei der erste Griff und der zweite Griff auf der Gebläserohranordnung angeordnet sind und der Batteriepakt unter der Gebläserohranordnung angeordnet ist.

6. Gebläse nach Anspruch 1, wobei der erste Griff hinter der Gebläserohranordnung angeordnet ist, einer des zweiten Griffs und des Batteriepakts auf der Gebläserohranordnung angeordnet ist und der andere des zweiten Griffs und des Batteriepakts unter der Gebläserohranordnung angeordnet ist.

7. Gebläse nach Anspruch 1, wobei die Mittelachse durch zumindest einen Teil des ersten Haltebereichs verläuft.

8. Gebläse nach Anspruch 1, wobei der erste Griff oder der zweite Griff um die Gebläserohranordnung herum angeordnet ist.

9. Gebläse nach Anspruch 1, wobei, wenn ein Luftstrom durch den Lufteinlass in die Gebläserohranordnung eintritt, der Batteriepakt zumindest teilweise auf einer Verlängerungslinie eines Luftpfads des einströmenden Luftstroms angeordnet ist.

10. Gebläse nach Anspruch 1, wobei ein Gewicht des Batteriepakts größer oder gleich 3 kg und kleiner oder gleich 6 kg ist.

11. Gebläse nach Anspruch 10, wobei die Nennleistung des Motors größer oder gleich 1200 W und kleiner oder gleich 4000 W ist und ein Luftvolumen des Luftauslasses des Gebläses größer oder gleich 700 Kubikfuß pro Minute (19,8218 Kubikmeter) ist.

12. Gebläse nach Anspruch 11, wobei der Batteriepakt lösbar mit dem Gebläse verbunden ist und ein Gesamtgewicht des Gebläses ohne montierten Batteriepakt größer oder gleich 1,8 kg und kleiner oder gleich 3 kg ist.

13. Gebläse nach Anspruch 12, wobei ein Durchmesser des Lüfters größer oder gleich 85 mm und kleiner oder gleich 100 mm ist.

## Revendications

1. Souffleur (100, 100a, 100b, 100c, 100d, 100e), comprenant :
un moteur (110) ;
un ventilateur (120) entraîné par le moteur pour tourner autour d'un axe central (101) ;
un bloc-batterie (130, 130a, 130b, 130c, 130d, 130e) destiné à alimenter le moteur ; et
un ensemble de tube de soufflage (140) formant une entrée d'air (141) pour une entrée d'air et une sortie d'air (142) pour une sortie d'air ;
dans lequel le souffleur comprend en outre :
une première poignée (150, 150a, 150b, 150c, 150d, 150e) formant une première prise (151) pour la tenue ; et
une seconde poignée (160, 160a, 160b, 160c, 160d, 160e) formant une seconde prise (161) pour la tenue ;
dans lequel au moins une partie d'une projection du bloc-batterie le long d'une direction radiale de l'axe central sur un plan passant par l'axe central est située entre la première poignée et la seconde poignée ;
**caractérisé en ce que**
le bloc-batterie est au moins partiellement situé derrière l'entrée d'air, c'est-à-dire dans une direction d'afflux à une position avant que l'air n'entre dans l'entrée d'air.

2. Souffleur selon la revendication 1, dans lequel la première poignée et la seconde poignée sont chacune situées sur un côté de l'ensemble de tube de soufflage et relativement indépendantes l'une de l'autre.

3. Souffleur selon la revendication 2, dans lequel le bloc-batterie, la première poignée et la seconde poignée sont situés sur un même côté de l'ensemble de tube de soufflage, et le bloc-batterie est situé entre la première poignée et la seconde poignée.

4. Souffleur selon la revendication 3, dans lequel le bloc-batterie, la première poignée et la seconde poignée sont situés sur l'ensemble de tube de soufflage.

5. Souffleur selon la revendication 2, dans lequel la première poignée et la seconde poignée sont situées sur l'ensemble de tube de soufflage, et le bloc-batterie est situé sous l'ensemble de tube de soufflage.

6. Souffleur selon la revendication 1, dans lequel la première poignée est située derrière l'ensemble de tube de soufflage, l'une de la seconde poignée et du bloc-batterie est située sur l'ensemble de tube de soufflage, et l'autre de la seconde poignée et du bloc-batterie est située sous l'ensemble de tube de soufflage.

7. Souffleur selon la revendication 1, dans lequel l'axe central passe à travers au moins une partie de la première prise.

8. Souffleur selon la revendication 1, dans lequel la première poignée ou la seconde poignée est disposée autour de l'ensemble de tube de soufflage.

9. Souffleur selon la revendication 1, dans lequel, lorsqu'un flux d'air s'écoule dans l'ensemble de tube de soufflage par l'entrée d'air, le bloc-batterie est au moins partiellement situé sur une ligne d'extension d'un chemin d'air du flux d'air entrant.

10. Souffleur selon la revendication 1, dans lequel un poids du bloc-batterie est supérieur ou égal à 3 kg et inférieur ou égal à 6 kg.

11. Souffleur selon la revendication 10, dans lequel la puissance nominale du moteur est supérieure ou égale à 1200 W et inférieure ou égale à 4000 W, et un volume d'air de la sortie d'air du souffleur est supérieur ou égal à 700 pieds cubes par minute (19,8218 mètres cubes).

12. Souffleur selon la revendication 11, dans lequel le bloc-batterie est relié de manière amovible au souffleur, et un poids total du souffleur sans bloc-batterie monté est supérieur ou égal à 1,8 kg et inférieur ou égal à 3 kg.

13. Souffleur selon la revendication 12, dans lequel un diamètre du ventilateur est supérieur ou égal à 85 mm et inférieur ou égal à 100 mm.
